# EUROPEAN PATENT SPECIFICATION

(11) **EP 2 898 117 B1**
(45) Date of publication and mention of the grant of the patent: **25.10.2017**
(21) Application number: 13839580.1
(22) Date of filing: 05.08.2013
(51) Int. Cl.: C25B 3/04

(54) **INTEGRATED PROCESS FOR PRODUCING OXALIC ACID FROM CARBON DIOXIDE**
INTEGRIERTES VERFAHREN ZUR HERSTELLUNG VON OXALSÄURE AUS KOHLENDIOXID
PROCÉDÉ INTÉGRÉ POUR LA PRODUCTION D'ACIDE OXALIQUE À PARTIR DE DIOXYDE DE CARBONE

(30) Priority: 19.09.2012 US 201261703229 P; 19.09.2012 US 201261703158 P; 19.09.2012 US 201261703175 P; 19.09.2012 US 201261703231 P; 19.09.2012 US 201261703232 P; 19.09.2012 US 201261703234 P; 19.09.2012 US 201261703238 P; 19.09.2012 US 201261703187 P; 17.10.2012 US 201261715060 P; 31.10.2012 US 201261720670 P; 21.12.2012 US 201213724339
(43) Date of publication of application: 29.07.2015
(73) Proprietor: Avantium Knowledge Centre B.V., 1014 BV Amsterdam (NL)
(72) Inventor: KACZUR, Jerry, J., North Miami Beach, FL 33160 (US)
(74) Representative: Rovers, Arnoldina M. A.
(86) International application number: PCT/US2013/053566
(87) International publication number: WO 2014/046791

(56) References cited:
- DE-A1- 2 301 032
- US-A- 1 280 622
- US-A- 4 589 963
- US-A- 5 290 404
- US-A1- 2008 223 727
- US-A1- 2012 018 311
- US-B2- 8 227 127
- HORI Y ET AL: "Electrocatalytic process of CO selectivity in electrochemical reduction of CO2 at metal electrodes in aqueous media", ELECTROCHIMICA ACTA, ELSEVIER SCIENCE PUBLISHERS, BARKING, GB, vol. 39, no. 11-12, 1 August 1994 (1994-08-01), pages 1833-1839, XP026551584, ISSN: 0013-4686, DOI: 10.1016/0013-4686(94)85172-7 [retrieved on 1994-08-01]
- T. MEISEL ET AL: "The thermal decomposition of alkali metal formates", JOURNAL OF THERMAL ANALYSIS, vol. 7, no. 1, 1 February 1975 (1975-02-01), pages 73-80, XP055207019, ISSN: 0022-5215, DOI: 10.1007/BF01911627

## Description

### TECHNICAL FIELD

The present disclosure generally relates to the field of electrochemical reactions, and more particularly to methods and/or systems for producing oxalic acid from carbon dioxide.

### BACKGROUND

The combustion of fossil fuels in activities such as the electricity generation, transportation, and manufacturing produces billions of tons of carbon dioxide annually. Research since the 1970s indicates increasing concentrations of carbon dioxide in the atmosphere may be responsible for altering the Earth's climate, changing the pH of the ocean, and other potentially damaging effects. Countries around the world, including the United States, may be seeking ways to mitigate emissions of carbon dioxide.

One implementation may be to convert carbon dioxide into economically valuable materials such as fuels and industrial chemicals. If the carbon dioxide may be converted using energy from renewable sources, it will be possible to both mitigate carbon dioxide emissions and to convert renewable energy into a chemical form that may be stored for later use. Electrochemical and photochemical pathways may be likely mechanisms for carbon dioxide conversion.

US 8,227,127 (B2) discloses a carbon dioxide negative method of manufacturing renewable hydrogen and trapping carbon dioxide from the air or gas streams comprising water electrolysis. US 2012/018311 (A1) discloses a carbon dioxide reduction method, wherein carbon dioxide is introduced into an electrolytic solution in contact with an electrode comprising one or more Group V elements. US 2008/223727 (A1) discloses electro-chemical processes for reduction of carbon dioxide, wherein carbon dioxide may be converted to formate salts or formic acid. US 5,290,404 (A) discloses an electrochemical process for producing an alcohol or carboxylic acid from a corresponding metal salt, wherein the metal cation residues are recovered. US 1,280,622 (A) discloses a process for the manufacture of oxalates wherein formates are heated with catalytic phosphates. Y. Hori *et al.* (1993, DOI: 10.1016/0013-4686(94)85172-7) discusses electro-chemical reduction of carbon dioxide at metal electrodes. T. Meisel *et al.* (1975, DOI: 10.1007/BF01911627) discusses the thermal decomposition of lithium, sodium, potassium, rubidium and caesium formates. US 4,589,963 (A) discloses a process for converting monobasic amino acid salts to their free acids by electrolysis. DE 2,301,032 (A1) discloses the production of oxalic acid by electrochemical reduction of carbon dioxide in aprotic solvents.

### SUMMARY OF THE PREFERRED EMBODIMENTS

The present disclosure is a method and system for production of oxalic acid. A method for producing oxalic acid may include receiving an anolyte feed at an anolyte region of an electrochemical cell including an anode and receiving a catholyte feed including carbon dioxide and an alkali metal hydroxide at a catholyte region of the electrochemical cell including a cathode. The method may include applying an electrical potential between the anode and cathode sufficient to reduce the carbon dioxide to at least one reduction product and converting the at least one reduction product and the alkali metal hydroxide to an alkali metal oxalate via a thermal reactor. The method may further include receiving the alkali metal oxalate at an electrochemical acidification electrolyzer and converting the alkali metal oxalate to oxalic acid at the electrochemical acidification electrolyzer.

It is to be understood that both the foregoing general description and the following detailed description are exemplary and explanatory only and are not necessarily restrictive of the present disclosure. The accompanying drawings, which are incorporated in and constitute a part of the specification, illustrate subject matter of the disclosure. Together, the descriptions and the drawings serve to explain the principles of the disclosure.

### BRIEF DESCRIPTION OF THE DRAWINGS

The numerous advantages of the present disclosure may be better understood by those skilled in the art by reference to the accompanying figures in which:
Fig. 1A shows a system for production of oxalic acid starting with the electrochemical generation of carbon monoxide from carbon dioxide in accordance with an embodiment of the present disclosure;
Fig. 1B shows a system for the production of oxalic acid utilizing HBr in the anolyte to co-produce bromine in accordance with an embodiment of the present disclosure;
Fig. 2A shows a system for production of oxalic acid starting with the electrochemical generation of formate using carbon dioxide in accordance with an embodiment of the present disclosure;
Fig. 2B shows a system for production of oxalic acid via electrochemical generation of formate using carbon dioxide and utilizing a halogen halide in the anolyte to co-produce bromine in accordance with an embodiment of the present disclosure;
Fig. 3 shows a system for formation of potassium formate using carbon dioxide in accordance with an embodiment of the present disclosure; and
Fig. 4 shows a system for electrochemical acidification of potassium oxalate in accordance with an embodiment of the present disclosure.

### DETAILED DESCRIPTION

Reference will now be made in detail to the subject matter disclosed, which is illustrated in the accompanying drawings.

The present disclosure relates to a method and system for production of oxalic acid. The method may employ an electrochemical cell reaction to produce carbon monoxide, CO, or sodium formate from a carbon dioxide feedstock. A thermal reaction with an alkali metal hydroxide, may be used to combine, for example, two sodium formate molecules, into a sodium oxalate product. The sodium oxylate may be then converted to an oxalic acid by a membrane based electrochemical acidification process, where protons (H⁺ ions) formed at the anode may be used to replace the sodium ions, and the sodium ions may be captured as sodium hydroxide at the cathode, and may be recycled to be used as the alkali metal hydroxide used in the intermolecular condensation process unit operation.

Before any embodiments of the disclosure are explained in detail, it is to be understood that the embodiments may not be limited in application per the details of the structure or the function as set forth in the following descriptions or illustrated in the figures. Different embodiments may be capable of being practiced or carried out in various ways. Also, it is to be understood that the phraseology and terminology used herein is for the purpose of description and should not be regarded as limiting. The use of terms such as "including," "comprising," or "having" and variations thereof herein are generally meant to encompass the item listed thereafter and equivalents thereof as well as additional items. Further, unless otherwise noted, technical terms may be used according to conventional usage. It is further contemplated that like reference numbers may describe similar components and the equivalents thereof.

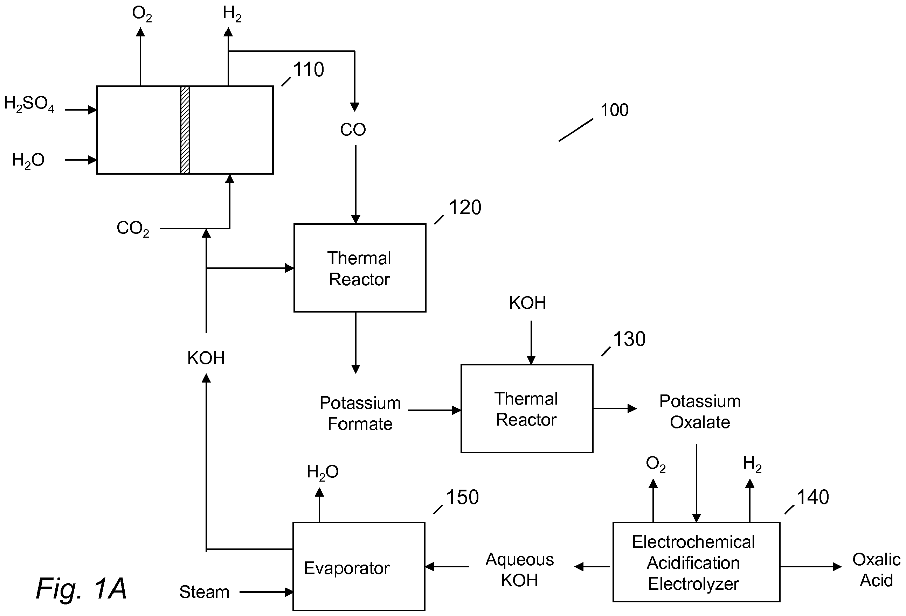

Referring to Fig. 1A, a system 100 for production of oxalic acid starting with the electrochemical generation of formate from carbon dioxide in accordance with an embodiment of the present disclosure is shown. System 100 may include an electrochemical cell 110. Electrochemical cell 110 (also referred as a container, electrolyzer, or cell) may be implemented as a divided cell. The divided cell may be a divided electrochemical cell and/or a divided photo-electrochemical cell. Electrochemical cell 110 may include an anolyte region and a catholyte region. Anolyte region and cathoyte region may refer to a compartment, section, or generally enclosed space, and the like without departing from the scope and intent of the present disclosure.

Catholyte region may include a cathode. Anolyte region may include an anode. An energy source (not shown) may generate an electrical potential between the anode and the cathode of electrochemical cell 110. The electrical potential may be a DC voltage. Energy source may be configured to supply a variable voltage or constant current to electrochemical cell 110. A separator may selectively control a flow of ions between the anolyte region and the catholyte region. Separator may include an ion conducting membrane or diaphragm material.

Electrochemical cell 110 may operate to perform an electrochemical reduction of carbon dioxide in an electrochemical cell producing carbon monoxide (CO) and hydrogen as cathode products and oxygen as an anode product when using sulfuric acid (H₂SO₄) as an anolyte.

The CO generated from electrochemical cell 110 may be separated from the hydrogen and then passed to a thermal reactor 120. Thermal reactor may react the carbon monoxide with an alkali metal hydroxide, such as KOH via a thermal intermolecular condensation reaction to form potassium formate. Thermal reactor 120 may operate to perform a thermal decomposition reaction or a carbonylation reaction, which may be reactions which incorporate CO into organic and inorganic chemical structures.

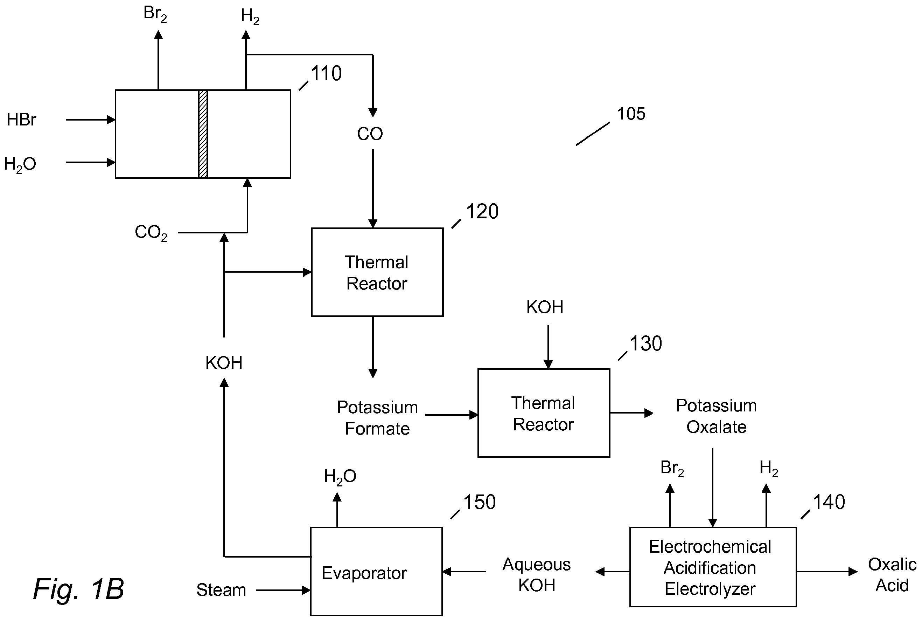

Potassium formate formed from thermal reactor 120 may be passed to another thermal reactor 130. Thermal reactor 130 may perform a second similar thermal intermolecular condensation reaction with an alkali metal hydroxide (e.g. KOH) that may promote the reaction to produce potassium oxalate. While system 100 of Fig. 1 depicts a thermal reactor 120 and thermal reactor 130, it is contemplated that a single thermal reactor may be employed with system 100 without departing from the scope and intent of the present disclosure.

Potassium oxalate from thermal reactor 130 may be dissolved in water and may be passed to an electrochemical acidification electrolyzer 140. Electrochemical acidification electrolyzer 140 may produce oxalic acid, and KOH along with oxygen and hydrogen byproducts. Electrochemical acidification electrolyzer 140 may be a membrane based unit including of at least three regions, including an anode region, one or more central ion exchange regions, and a cathode region. It is contemplated that an energy source (not shown) may generate an electrical potential between the anode and the cathode of electrochemical acidification electrolyzer 140 sufficient to produce oxalic acid. Potassium oxalate may be passed through the central ion exchange region where potassium ions may be replaced with protons, and the displaced potassium ions pass through the adjoining membrane into the cathode region to form KOH. The anode reaction may utilize an acid, such as sulfuric acid, producing oxygen and hydrogen ions.

The hydrogen byproduct resulting from electrochemical acidification electrolyzer 140, as an alternative embodiment, may be used as a fuel to produce steam or used in a side chemical process that may utilize hydrogen, such as in a chemical hydrogenation process.

The oxalic acid product may be purified to produce a final purified product, or may be further processed as a chemical intermediate to produce another product, such as monoethylene glycol, using an electrochemical reduction or a thermochemical process.

Aqueous KOH from electrochemical acidification electrolyzer 140 may be passed to an evaporator 150. Evaporator 150 may evaporate the water from aqueous KOH product using steam or another heat source, converting it into a concentrated aqueous solution and/or solid with 5% or less water content as needed in electrochemical cell 110 and thermal reactor 120.

Referring to Fig. 1B, a system 105 for production of oxalic acid, utilizing a hydrogen halide, such as HBr, in the anolyte to co-produce bromine in accordance with an embodiment of the present disclosure is shown. System 105 may operate with a less energy intensive electrochemical process, using HBr as the anolyte in the anode region of electrochemical cell 110 and electrochemical acidification electrolyzer 140, producing bromine and hydrogen ions at a significantly lower anode potential. The bromine may then be used, for example, in reactions to produce brominated chemical products, such as brominated organic compounds, for example bromoethane, which may then be converted into alcohols such as ethanol, or converted to monoethylene glycol in a series of thermochemical reactions. It is contemplated that system 105 shown with thermal reactor 120 and thermal reactor 130 could be implemented with a single thermal reactor without departing from the scope and intent of the present disclosure.

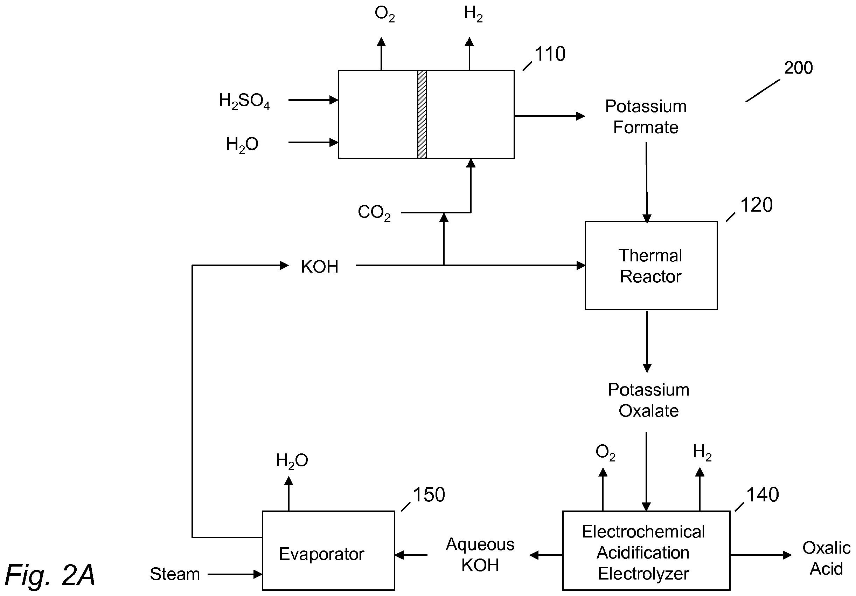

Referring to Fig. 2A, a system 200 for production of oxalic acid, starting with the electrochemical generation of formate using carbon dioxide in accordance with an embodiment of the present disclosure is shown. System 200 may provide an alternative system for production of oxalic acid as produced by systems 100, 105 of Fig. 1A and Fig. 1B.

System 200 may include an electrochemical cell 110. Electrochemical cell 110 may operate to perform an electrochemical reduction of carbon dioxide with a potassium carbonate cathode feed, which may be formed from the reaction of CO₂ with KOH, to produce potassium formate along with oxygen as an anode product when using sulfuric acid (H₂SO₄) as an anolyte.

Potassium formate may be passed to a thermal reactor 120. Thermal reactor 120 may perform a thermal intermolecular condensation reaction with an alkali metal hydroxide (e.g. KOH) to produce potassium oxalate.

Potassium oxalate from thermal reactor 120 may be dissolved in water and may be passed to an electrochemical acidification electrolyzer 140. Electrochemical acidification electrolyzer 140 may produce oxalic acid, and KOH along with oxygen and hydrogen byproducts. Electrochemical acidification electrolyzer 140 may be a membrane based unit including of at least three regions, including an anode region, one or more central ion exchange regions, and a cathode region. Potassium oxalate may be passed through the central ion exchange region where potassium ions may be replaced with protons, and the displaced potassium ions pass through the adjoining membrane into the cathode region to form KOH. The anode reaction may utilize an acid, such as sulfuric acid, producing oxygen and hydrogen ions.

The hydrogen byproduct resulting from electrochemical acidification electrolyzer 140, as an alternative embodiment, may be used as a fuel to produce steam or used in a side process that may utilize hydrogen, such as in a chemical hydrogenation process.

The oxalic acid product may be purified to produce a final purified product, or may be further processed as a chemical intermediate to produce another product, such as monoethylene glycol, using an electrochemical reduction or thermochemical process.

Aqueous KOH from electrochemical acidification electrolyzer 140 may be passed to an evaporator 150. Evaporator 150 may evaporate the water from aqueous KOH product using steam or another heat source, converting it into a concentrated aqueous solution and/or solid with 5% or less water content as needed in the electrochemical cell 110 or thermal reactor 120.

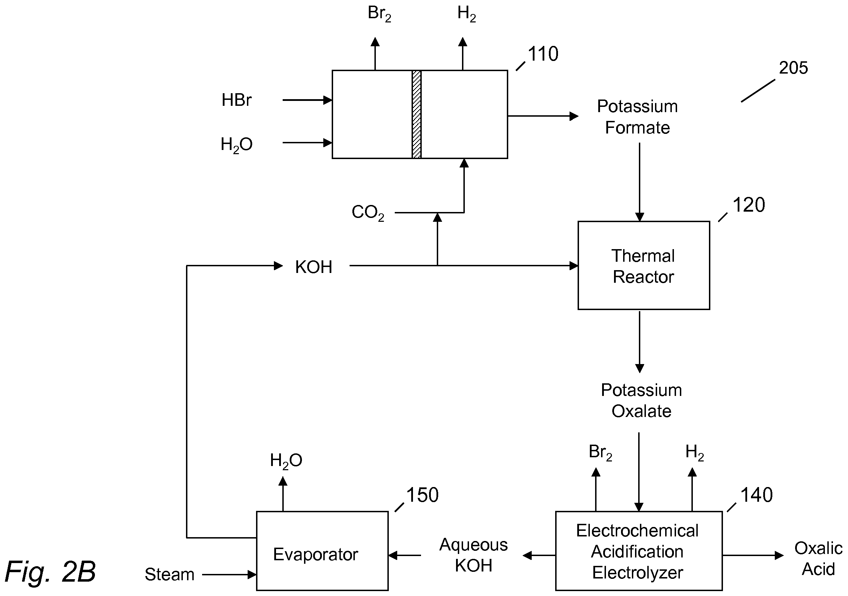

Referring to Fig. 2B, a system 205 for production of oxalic acid via electrochemical generation of formate using carbon dioxide and utilizing a halogen halide in the anolyte to co-produce a halogen, such as bromine, in accordance with an embodiment of the present disclosure is shown. System 205 may be similar to system 200, where system 205 may use a hydrogen halide, such as HBr as the anolyte in the anode regions of electrochemical cell 110 and electrochemical acidification electrolyzer 140. Electrochemical cell 110 may produce bromine and hydrogen ions at a significantly lower anode potential. Bromine may then be used, for example, in reactions to produce brominated chemical products, such as bromoethane, which may then be converted into alcohols such as ethanol, or converted to monoethylene glycol in a series of thermochemical reactions.

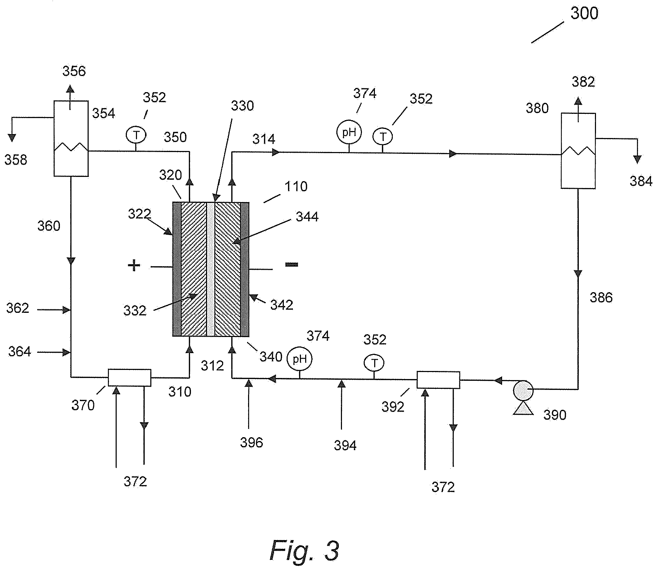

Referring to Fig. 3, a system 300 for production of a formate, such as potassium formate, using carbon dioxide in accordance with an embodiment of the present disclosure is shown. System 300 may illustrate the electrochemical reduction of carbon dioxide in the production of an alkali metal formate as shown in electrochemical cell 110 of Fig. 2A and Fig. 2B. Electrochemical cell 110 may include an anolyte input feed 310 and a catholyte input feed 312 to produce a product 314. Product 314 may be a solution of potassium formate with an excess potassium bicarbonate (KHCO₃). Anolyte region 320 may have a titanium anode 322 having an anode electrode catalyst coating facing cation exchange membrane 330. Anode mesh screen 332 may be a folded expanded titanium screen with an anode electrocatalyst coating and provides spacing and contact pressure between anode 322 and cation exchange membrane 332. Cation exchange membrane 330 may selectively control a flow of ions between anolyte region 320 from catholyte region 340.

Catholyte region 340 may have a mounted cathode 342, which may be a metal electrode with an active electrocatalyst layer on the front side facing membrane 330. High surface area cathode structure 344 may be mounted with direct contact pressure between the face of cathode 342 and cation membrane 330.

As shown in Fig. 1A and Fig. 2A, feeding anolyte region 320 may be stream 310 which may include anolyte, the anolyte including an aqueous sulfuric acid electrolyte solution. Stream 310 may enter the anolyte region 320 and flow by the face of anode 322 through folded anode screen 332. Anode reactions may typically be water splitting into oxygen (O₂) and hydrogen ions (H⁺) or protons. The gases and liquid mixture from anolyte region 320 may leave as stream 350, which flows by temperature sensor 352 monitoring a solution temperature in the stream, and into anolyte gas/liquid disengager 354. In disengager 354, the gas may be vented as stream 356, and excess anolyte overflow leaves as stream 358. Stream 360 may be a gas-depleted exit stream from the anolyte disengager 354, with a deionized water feed stream 362 and a sulfuric acid make-up feed stream 364 added to the recirculation stream to maintain anolyte acid strength and volume. Stream 360 with added streams 362 and 364 may then pass through an optional heat exchanger 370 with a cooling water supply 372, and then becomes stream 310 feeding into the anolyte region 320.

Electrochemical cell 110 may include a catholyte region 340 which includes cathode 342 having an electrocatalyst surface facing membrane 330. High surface area cathode structure 344 may be mounted between membrane 330 and cathode 342, relying on contact pressure with cathode 342 for conducting electrical current into the structure. The interface between high surface area structure 344 and membrane 330 may utilize a thin expanded plastic mesh insulator screen (not shown) to minimize direct contact with the high surface area cathode material with the membrane 330.

Feed stream 312 may feed into catholyte region 340, flowing through the high surface area structure 344 and across the face of cathode 342 where cathode reduction reactions between carbon dioxide, electrolyte, and cathode material at the applied current and voltage potential produce exit stream 314, the exit stream including a formate.

Stream 314 may be the exit solution and gas mixture product from the cathode reaction which flows by pH monitoring sensor 374 and temperature sensor 352 and then into catholyte gas/liquid disengager 380 where the gas exits as stream 382 and formate/electrolyte overflow exits as stream 384, and the gas-depleted stream leaves the disengager as stream 386. Stream 386 may then enter an input of catholyte recirculation pump 390, which then passes through heat exchanger 392 which uses cooling water 372, then passes by temperature sensor 352. A fresh catholyte electrolyte feed 394 may be metered into stream 386 which may be used to adjust the catholyte flow stream pH into the catholyte region 340 and control a product overflow rate and sets the formate product concentration, with the pH monitored by pH sensor 374. Carbon dioxide flow stream 396 may be metered into the flow stream which enters the catholyte region 340 as stream 312.

In an alternative embodiment, as shown in FIGs. 1B and 2B, the sulfuric acid anolyte shown in FIGs. 1A and 2A may be replaced with a hydrogen halide (e.g. HBr) as the anolyte, producing a halide (e.g. bromine) and hydrogen ions at a much lower voltage potential than the generation of oxygen at the anode. The halide may then be used, for example, in reactions to produce halide chemical products, such as bromoethane in the reaction with an alkane, such as ethane, which may then be converted into alcohols (e.g. ethanol) or converted to monoethylene glycol in a series of thermochemical reactions.

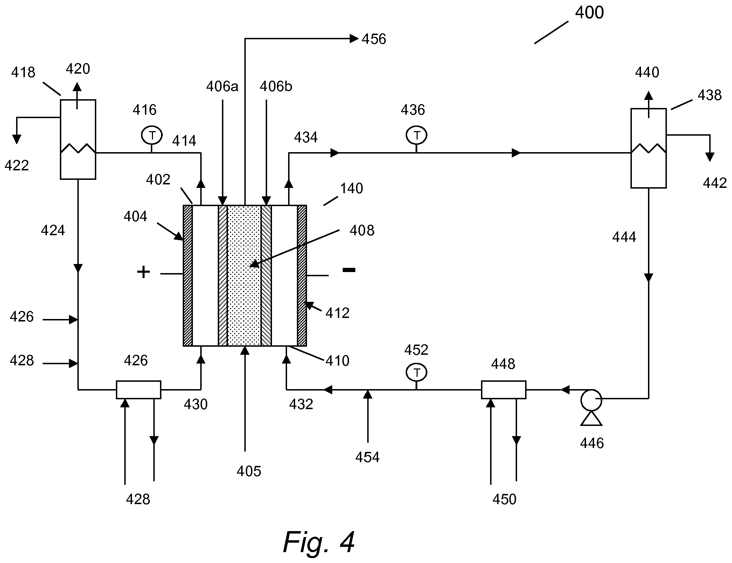

Referring to Fig. 4, system 400 for electrochemical acidification of potassium oxalate in accordance with an embodiment of the present disclosure is shown. Electrochemical acidification electrolyzer 140 may include an anolyte region 402, a central ion exchange region 408 bounded by cation ion exchange membranes 406a and 406b on each side, and a catholyte region 410 where an alkali metal hydroxide (e.g. KOH) may be formed. Hydrogen ions (H⁺) or protons may be generated in the anolyte region 402, which then may pass through the adjoining membrane 406a into the central ion exchange region 408 when a potential and current may be applied to the cell. An alkali metal oxalate (e.g. potassium oxalate) product solution 405, such as generated in thermal reactor 120, 130 of Fig. 1A-2B, may pass through the central ion exchange region 408, where the protons displace the potassium ions in the solution stream, thus acidifying the solution and forming oxalic acid, stream 456, and the displaced potassium ions may pass through the adjoining cation exchange membrane 406b into the catholyte region 410, where they combine with hydroxide ions (OH⁻) formed from water reduction reaction at the cathode to form an alkali metal hydroxide (e.g. KOH) stream 434.

Electrochemical acidification electrolyzer 140 may include input feeds 430 and 432 and may produce a solution of oxalic acid 456, oxygen 420 from the anolyte region 402, and KOH 442 from the anolyte region 410. Anode region 402 may include a titanium anode 404 with an anode electrode catalyst coating facing cation exchange membrane 406a. The central ion exchange region 408 may contain a plastic mesh spacer to maintain the space in the central ion exchange region between cation exchange membranes 406a and 406b. Optionally, a preferred material may be the use of a cation ion exchange material between the membranes, so that there may be increased electrolyte conductivity in the ion exchange region solution. Catholyte region 410 may include a cathode 412.

Anolyte region 402 may have feed stream input 430 including sulfuric acid, which may flow through the anolyte region 402 and exit as stream 414 including a gas and liquid, passing by temperature sensor 416 into anolyte disengager 418, where the gas exits as stream 420 and liquid overflow as stream 422. Gas-depleted stream 424 may exit the anolyte disengager 418 and deionized water stream 426 may be metered into the stream 424 as well as sulfuric acid make-up stream 428 to maintain acid electrolyte strength in the anolyte region 402. Stream 424 may pass through optional heat exchanger 426 which may have cooling water supply 428 to cool or maintain the stream 424 temperature, and the stream 424 enters the anolyte region 402 as stream 430.

Catholyte region 410 may include feed stream 432 which may be the recirculating alkali metal hydroxide (e.g. KOH) in the catholyte loop, which enters catholyte region 410 and flows by cathode 412, which may generate hydrogen gas and hydroxide (OH⁻) ions, and forms a alkali metal hydroxide from the combination of alkali metal ions crossing the membrane 406b with the hydroxide ions formed at the cathode 412 from the reduction of water. Exit stream 434 from the cathode region 410 may contain alkali metal hydroxide and hydrogen gas from the cathode reactions, and passes by temperature sensor 436 and then into catholyte disengager 438, where hydrogen gas 440 may be separated from the catholyte solution, which exits catholyte disengager 438 as recycle stream 444 and alkali metal hydroxide product overflow stream 442. Recycle stream 444 may pass through optional recirculation pump 446 and then through optional heat exchanger 448, which uses cooling water supply 450. The stream then passes by temperature sensor 452, and then may have a deionized water addition stream 454 added to the stream to control the alkali metal hydroxide concentration in the catholyte recirculation loop, and then reenters the catholyte region 410 as stream 432.

In an alternative embodiment, the sulfuric acid anolyte may be replaced using HBr as the anolyte, producing bromine and hydrogen ions at a much lower voltage potential than the generation of oxygen at the anode.

### Formate CO₂ Reduction Chemistry

The postulated chemistry of the reduction of CO₂ at the cathode may be as follows.

Hydrogen atoms may be adsorbed at the electrode from the reduction of water as shown in equation (1).

H⁺ + e⁻ → H_{ad} (1)

Carbon dioxide may be reduced at the cathode surface with the adsorbed hydrogen atom to form formate, which may be adsorbed on the surface as in equation (2).

CO₂ + H_{ad} → HCOO_{ad} (2)

The adsorbed formate adsorbed on the surface then reacts with another adsorbed hydrogen atom to form formic acid that may be released into the solution as in equation (3)

HCOO_{ad} + H_{ad} → HCOOH (3)

The competing reaction at the cathode may be the reduction of water where hydrogen gas may be formed as well as hydroxide ions as in equation (4).

2H₂O + 2e⁻ → H₂ + 2OH⁻ (4)

In observations of the operation of the electrochemical cells in the present system, the addition of bicarbonate in the catholyte solution and utilizing an acidic anolyte, it was noted that the pH of the catholyte solution declines with time, and two types of bubbles may be seen in the catholyte output stream - large bubbles and a lower concentration of very fine bubbles in the output stream of the catholyte region. It may be postulated that the large bubbles may be composed of CO₂ from the proton or hydrogen ion decomposition of bicarbonate to CO₂ and water and that the very fine bubbles may be byproduct hydrogen. It may be postulated that the hydrogen ions or protons passing through the membrane may be decomposing some of the bicarbonate to CO₂ and water within the electrode material, and possibly very close to the electrode surfaces, providing a higher CO₂ partial pressure environment, and resulting in higher current efficiencies at low operating partial pressures of dissolved CO₂ in the solution at ambient operating pressures.

Operating the electrochemical cell at higher pressures (above atmospheric), should also increase the current efficiency and allow operation of the cells at higher current densities.

### Anode Reactions

The anode reaction may be the oxidation of water into oxygen and hydrogen ions as shown in equation (5).

2H₂O → 4H⁺ + 4e⁻ + O₂ (5)

Below may be the various preferred and alternative embodiments for the process, arranged in different categories.

### Formate Formation From CO

The thermal intermolecular reaction of potassium formate CO with KOH may be as follows:

CO + KOH → HCOOK (6)

The KOH may be consumed in the reaction. Under the right conditions, both formate and oxalate may both be produced, and which may decrease the number of process steps. The production of both would require the separation of these carboxylic acids from each other.

### Oxalate From Formate

The thermal intermolecular reaction of potassium formate with KOH may be as follows:

2HCOOK + KOH → K₂C₂O₄ + H₂ (9)

Sodium or potassium carbonate may also be used for converting formate to oxalate, but the yields have been shown to be significantly lower. Under the right operating conditions, the yields may be significantly improved.

### Anode Oxidation Reactions

The anode reaction when utilizing sulfuric acid in the anolyte, may be the oxidation of water generating hydrogen ions and oxygen as follows:

2H₂O ---> O₂ + 4H⁺ + 4e⁻ (10)

If hydrobromic acid, HBr, may be used in the anolyte, the reaction may be the oxidation of the bromide to bromine as follows:

2HBr ---> Br₂ + 2H⁺ + 2e⁻ (11)

### Electrolyzer Configurations

The following present various exemplary combinations of cell configurations, electrode structures, and anolyte/catholyte compositions that may be used in the electrochemical CO and/or formate, and electrochemical acidification (EA) electrolyzers in the above described processes.

The cathode of the electrochemical cell 110 and electrochemical acidification electrolyzer 140 may be a high surface area electrode. The void volume for the cathode may be from about 30% to 98%. The surface area of the cathode may be from 2 cm²/cm³ to 500 cm²/cm³ or higher. The surface areas may be further defined as a total area in comparison to the current distributor/conductor back plate area with a preferred range of from 2 to 1000 times the current distributor/conductor back plate area.

The cathode of the electrochemical cell 110 may be electrolessly plated indium or tin on a copper woven mesh, screen or fiber structure. Indium-copper intermetallics may be formed on the copper woven mesh, screen or fiber structure. The intermetallics may be harder than the soft indium metal, and allow better mechanical properties in addition to usable catalytic properties.

In the electrochemical reduction of carbon dioxide metals including Pb, Sn, Hg, Tl, In, Bi, and Cd among others may produce formic acid (or formate) as a major C₁ product in aqueous solutions. Alloy combinations of these metals such as Hg/Cu, Sn-Cd, Sn-Zn, Cu-Sn, may form at various performance efficiencies. One of the issues may be that a number of these metals, such as Sn and Cu, may be that the surface changes and deactivates or loses the Faradaic conversion activity in producing formate. The surface then may have to be reactivated by a reverse current or polarity. In the production for formation of C₂₊ chemicals, such as oxalic acid and glycolic acid, metals such as Ti, Nb, Cr, Mo, Ag, Cd, Hg, Tl, An, and Pb as well as Cr-Ni-Mo steel alloys among many others may result in the formation of these higher C₂₊ products.

In another embodiment, the cathode surfaces may be renewed by the periodic addition of indium salts or a mix of indium/tin salts in situ during the electrochemical cell operation. Electrochemical cell 110 may be operated at full rate during operation, or temporarily operated at a lower current density with or without any carbon dioxide addition during the injection of the metal salts.

In another exemplary embodiment, in preparing cathode materials for the production of C₂₊ chemicals, the addition of metal salts that may reduce on the surfaces of the cathode structure may be also used, such as the addition of Ag, Au, Mo, Cd, Sn, etc. to provide a catalytic surface that may be difficult to prepare directly during cathode fabrication or for renewal of the catalytic surfaces.

Cathode 412 for the electrochemical acidification electrolyzer 140 may include stainless steels and nickel electrodes. Cathode 412 may include coatings on the cathode to reduce the hydrogen overpotential.

An alkali metal hydroxide range for the electrochemical acidification electrolyzer 140 may be 5% to 50% by weight, and more preferably 10% to 45% by weight. The alkali metal hydroxide examples may be NaOH, KOH, CsOH and the like.

Cathode materials for the cathode of electrochemical cell 110 for carbon monoxide production from CO₂ may include precious and noble metals, Cu, Ag, Au, and their oxides, specifically the oxides of copper. Other d-block metals, such as Zn and Ni, may be selective for CO reduction in aqueous media. Regardless of specificity for CO as a CO₂ reduction product, a cathode for electrochemical cell 110 for an aqueous system for CO₂ reduction to CO may have a high hydrogen overpotential to prevent competing H₂ formation.

Anions used for CO production at the cathode may be any species stable at working potentials such as sulfate, chloride or bicarbonate. CO₂ reduction to CO may favor high pH due to limited competing H₂ formation; however there may be a practical pH maximum at around 8.5 for a saturated CO₂ solution due to the formation of carbonic acid on dissolution. There may be no strict lower limit that may have been observed. Depending on the chemistry of the system, the pH of the catholyte region of electrochemical cell 110 may range from 3 to 12. The pH may be a function of the catalysts used, such that there is no corrosion at the electrochemical cell 110 and catholyte operating conditions.

Electrolytes for the electrochemical cell 110 for forming CO and formates may include alkali metal bicarbonates, carbonates, sulfates, and phosphates, borates, ammonium, hydroxides, chlorides, bromides, and other organic and inorganic salts. The electrolytes may also include non-aqueous electrolytes, such as propylene carbonate, methanesulfonic acid, methanol, and other ionic conducting liquids, which may be in an aqueous mixture, or as a non-aqueous mixture in the catholyte. The introduction of micro bubbles of carbon dioxide into the catholyte stream may improve carbon dioxide transfer to the cathode surfaces.

Electrolytes for the anolyte region of the electrochemical cell 110 may include: alkali metal hydroxides, (e.g. as KOH, NaOH, LiOH) in addition to ammonium hydroxide; inorganic acids such as sulfuric, phosphoric, and the like; organic acids such as methanesulfonic acid in both non-aqueous and aqueous solutions; and alkali halide salts, such as the chlorides, bromides, and iodine types such as NaF, NaCl, NaBr, LiBr, KF, KCl, Kbr, Kl, and Nal, as well as their acid halide forms, such as HCl, and HBr. The alkali halide salts may produce, for example, fluorine, chlorine, bromine, or iodine as halide gas or dissolved aqueous products from the anolyte region. Methanol or other hydrocarbon non-aqueous liquids may also be used, and they would form some oxidized organic products from the anolyte. Selection of the anolyte would be determined by the process chemistry product and requirements for lowering the overall operating cell voltage. For example, using HBr as the anolyte, with the formation of bromine at the anode, which require a significantly lower anode voltage potential than chlorine formation. Hydroiodic acid, Hl, may form iodine at anode potential voltages even lower than that of bromine.

Catholyte cross sectional area flow rates may range from 2 to 3,000 gpm/ft² or more (0.0076 - 11.36 m³/m²). Flow velocities may range from 0.002 to 20 ft/sec (0.0006 to 6.1 m/sec).

Catholyte region of the electrochemical cell 110 may include at least one catalyst. The catalyst may be a homogenous heterocyclic catalyst which may be utilized in the catholyte region to improve the Faradaic yield to formate. Homogenous heterocyclic catalysts may include, for example, one or more of pyridine, tin 2-picoline, 4-hydroxy pyridine, adenine, a heterocyclic amine containing sulfur, a heterocyclic amine containing oxygen, an azole, a benzimidazole, a bipyridine, a furan, an imidazole, an imidazole related species with at least one five-member ring, an indole, a lutidine, methylimidazole, an oxazole, a phenanthroline, a pterin, a pteridine, pyridine, a pyridine related species with at least one six-member ring, a pyrrole, a quinoline, or a thiazole, and mixtures thereof.

Operating electrochemical cell 110 at a higher operating pressure in the catholyte region may allow more dissolved CO₂ to dissolve in the aqueous electrolyte. Typically, electrochemical cells may operate at pressures up to about 20 to 30 psig in multi-cell stack designs, although with modifications, they could operate at up to 100 psig. The electrochemical cell 110 anolyte may also be operated in the same pressure range to minimize the pressure differential on the membrane separating the two electrode regions. Special electrochemical designs may be required to operate electrochemical units at higher operating pressures up to about 60 to 100 atmospheres or greater, which may be in the liquid CO₂ and supercritical CO₂ operating range.

In another embodiment, a portion of the catholyte recycle stream may be separately pressurized using a flow restriction with back pressure or using a pump 390 with CO₂ injection such that the pressurized stream may be then injected into the catholyte region of the electrochemical cell 110, and potentially increasing the amount of dissolved CO₂ in the aqueous solution to improve the conversion yield.

Catholyte region and anolyte region of electrochemical cell 110 may have operating temperatures that may range from -10 to 95 °C, more preferably 5 - 60°C. The lower temperature may be limited by the electrolytes used and their freezing points. In general, the lower the temperature, the higher the solubility of CO₂ in the aqueous solution phase of the electrolyte which may result in obtaining higher conversion and current efficiencies. However, operating electrochemical cell voltages may be higher, such that an optimization may be required to produce the chemicals at the lowest operating cost.

The electrochemical cell 110 and the electrochemical acidification electrolyzer 140 may be zero gap, flow-through electrolyzers with a recirculating catholyte electrolyte with various high surface area cathode materials. For example, flooded co-current packed and trickle bed designs with various high surface area cathode materials may be employed. The stack cell design may be bipolar and/or monopolar.

The anode of the electrochemical cell 110 and the electrochemical acidification electrolyzer 140 may include one or more anode coatings. For example, for acid anolytes and oxidizing water under acid conditions, electrocatalytic coatings may include: precious metal and precious metal oxides such as ruthenium and iridium oxides, as well as platinum and gold and their combinations as metals and oxides on valve metal substrates such as titanium, tantalum, or niobium as typically used in the chlor alkali industry or other electrochemical processes which may be stable as anodes. For other anolytes such as alkaline or hydroxide electrolytes electrocatalytic coatings may include carbon, graphite, cobalt oxides, nickel, stainless steels, and their alloys and combinations which may be stable as anodes under alkaline conditions.

Membrane 330, 406a, 406b may be cation ion exchange type membranes such as those having a high rejection efficiency to anions. For example perfluorinated sulfonic acid based ion exchange membranes such as DuPont Nafion® brand unreinforced types N117 and N120 series, more preferred PTFE fiber reinforced N324 and N424 types, and similar related membranes manufactured by Japanese companies under the supplier trade names such as Flemion®. Other multi-layer perfluorinated ion exchange membranes used in the chlor alkali industry and having a bilayer construction of a sulfonic acid based membrane layer bonded to a carboxylic acid based membrane layer may be employed to efficiently operate with an anolyte and catholyte above a pH of about 2 or higher. These membranes may have a higher anion rejection efficiency. These may be sold by DuPont under their Nafion® trademark as the N900 series, such as the N90209, N966, N982, and the 2000 series, such as the N2010, N2020, and N2030 and all of their types and subtypes. Hydrocarbon based membranes, which may be made from of various cation ion exchange materials may also be used if the anion rejection may be not as critical, such as those sold by Sybron under their trade name Ionac®, AGC Engineering (Asahi Glass) under their Selemion® trade name, and Tokuyama Soda among others.

### ALTERNATIVE EMBODIMENTS

Alternative anolyte solutions may be employed to generate chemical products such as bromine at the anode region of electrochemical cell 110, which may be used to brominate organics as intermediates in making ethanol, ethylene, and other chemicals based on bromine chemistry. The use of sulfur compounds in the anolyte region, such as sodium sulfide or SO₂ or the use of organics, and conducting the partial oxidation of organics, such as methanol, etc. are also contemplated.

Various alkali metal hydroxides may be employed at the electrochemical cell 110 and/or a thermal reactor 120, 130. For example, hydroxides of lithium, sodium, potassium, and rubidium, and cesium may be used. Further, alkaline earth metal hydroxides may also be used.

Thermal reactors 120, 130 may perform thermal intermolecular condensation reactions using alkali metal hydroxides. Such condensation reactions may include chemical reactions in which two molecules or moieties (functional groups) combine to form one single molecule, together with the loss of a small molecule. When two separate molecules may be reacted, the condensation may be termed intermolecular. Since the reaction occurs at elevated temperatures, the reactions may be characterized as "thermal intermolecular condensation step". If water is lost, the reactions may be characterized as "thermal intermolecular dehydration step". These reactions may occur in an aqueous solution phase, such as with the reaction of CO with the alkali metal hydroxide, or as a melt of the alkali metal carboxylic acid and the alkali metal hydroxide in the thermal reaction.

Thermal reactors 120, 130 may operate at about 40 to 500°C, and more preferably at about 50 - 450°C. The operating temperatures may depend on the decomposition temperatures of the carboxylic acid and the optimum temperature to get the highest yields of the carboxylic product. A residence time of the reaction at optimum reaction temperatures may range from 5 seconds to hours, and the equipment chosen to conduct the reaction may be designed to provide the rate of heating and cooling required to obtain optimal conversion yields. This may include the use of cold rotating metal that may rapidly chill the hot thermal product after the thermal reaction period is completed.

Thermal reactors 120, 130 may operate in air or an enriched oxygen atmospheres, as well as inert gas atmospheres, such as nitrogen, argon, and helium. Carbon dioxide and hydrogen atmospheres may also be employed to obtain the highest yield in the reaction, as well as partial CO atmospheres. Thermal reactors 120, 130 may be operated under a full or partial vacuum.

Alkali metal hydroxide concentration ranges may be 2% to 99%, more preferably 5 to 98% by weight. The alkali hydroxide may run in molar excess of the alkali metal carboxylic acid being thermally processed in the initial reaction mix or in a continuous process where they may be mixed together. The anticipated molar ratios of the alkali metal carboxylic acid to alkali metal hydroxide may range from 0.005 to 100, and more preferably 0.01 to 50. It may be preferable to use the least amount of alkali metal hydroxide as possible for the reaction to reduce the consumption of the hydroxide in the process.

The process operating equipment that may be employed for thermal reactors 120, 130 may include various commercially available types. For the CO reaction with alkali metal hydroxide, the equipment that may be used may be batch operation equipment, where gas may be injected into a solution mix of the alkali hydroxide. This may also be done in a continuous manner where there may be a feed input of fresh alkali metal hydroxide into a continuous stirred tank reactor (CSTR) with a CO feed into the solution through a gas diffuser into the solution. Alternatively, counter-current packed towers may be used where CO may be injected into the tower counter-current to the flow of alkali metal hydroxide.

For a sodium oxalate operation, thermal reactors 120, 130 may include equipment such as rotary kilns, and single pass plug flow reactors that may be used if the process required the thermal processing of a mixture of alkali metal formate and alkali hydroxide as a solid or hot melt mix. Preferably, the equipment would be operated in a continuous fashion, providing the required residence time for the reaction to go to completion at the selected temperatures, which may then be followed by a cooling section.

A thermal intermolecular condensation process may also be conducted to produce higher carbon content carboxylic acids as well as converting the carboxylic acids into esters, amides, acid chlorides, and alcohols. In addition, the carboxylic acid products may be converted to the corresponding halide compounds using bromine, chlorine, and iodine.

It is contemplated that method for production of oxalic acid, may include various steps performed by systems 100, 105, 200 and 205. It may be believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described may be merely explanatory.

## Claims

1. A method for producing oxalic acid comprising:
receiving an anolyte feed at an anolyte region of an electrochemical cell including an anode;
receiving a catholyte feed including carbon dioxide and an alkali metal hydroxide at a catholyte region of the electrochemical cell including a cathode;
applying an electrical potential between the anode and the cathode sufficient to reduce the carbon dioxide to at least one reduction product;
converting the at least one reduction product and the alkali metal hydroxide to an alkali metal oxalate via a thermal reactor;
receiving the alkali metal oxalate at an electrochemical acidification electrolyzer; and
converting the alkali metal oxalate to oxalic acid at an electrochemical acidification electrolyzer.

2. The method of Claim 1, wherein the anolyte feed includes
- water and sulfuric acid; or
- water and a hydrogen halide.

3. The method of Claim 2, wherein the hydrogen halide includes hydrogen bromide.

4. The method of Claim 1, wherein the alkali metal hydroxide includes potassium hydroxide.

5. The method of Claim 1, wherein the at least one reduction product includes carbon monoxide or potassium formate.

6. The method of Claim 1, wherein converting the at least one reduction product and the alkali metal hydroxide to an alkali metal oxalate at a thermal reactor comprises:
generating an alkali metal formate intermediate product.

7. The method of Claim 6, wherein the alkali metal formate intermediate is potassium formate.

8. The method of Claim 1, wherein converting the alkali metal oxalate to oxalic acid at the electrochemical acidification electrolyzer comprises:
passing the alkali metal oxalate through an ion exchange region of the electrochemical acidification electrolyzer bounded by one or more cation ion exchange membranes.

9. A system for producing an oxalic acid comprising:
an electrochemical cell having an anolyte region including an anode and a catholyte region including a cathode separated by at least one ion exchange membrane;
an anolyte feed input operably coupled to the anolyte region of the electrochemical cell;
a catholyte feed input operably coupled to the catholyte region of the electrochemical cell, the catholyte feed including carbon dioxide and alkali metal hydroxide;
a thermal reactor configured to receive a reduction product, generated via a reduction reaction at the catholyte region of the electrochemical cell, and the alkali metal hydroxide;
an electrochemical acidification electrolyzer configured to receive alkali metal oxalate product generated at the thermal reactor and generate oxalic acid; and
a source of electrical potential operably connected to the electrochemical cell and the electrochemical acidification electrolyzer.

10. The system of Claim 9, wherein the anolyte feed includes
- water and sulfuric acid; or
- water and a hydrogen halide.

11. The system of Claim 10, wherein the hydrogen halide includes hydrogen bromide.

12. The system of Claim 9, wherein the alkali metal hydroxide includes potassium hydroxide.

13. The system of Claim 9, wherein the thermal reactor configured to receive a reduction product, generated via a reduction reaction at the catholyte region of the electrochemical cell, and the alkali metal hydroxide comprises:
a first thermal reactor configured to receive a carbon monoxide reduction product and the alkali metal hydroxide and generate an alkali metal formate product; and
a second thermal reactor configured to receive the alkali metal formate product and an alkali metal hydroxide and generate an alkali metal oxalate product.

14. The system of Claim 9, wherein the electrochemical acidification electrolyzer configured to receive an alkali metal oxalate product comprises:
an electrochemical acidification electrolyzer configured to receive an alkali metal oxalate product at an ion exchange region of the electrochemical acidification electrolyzer at least partially bounded by one or more cation ion exchange membranes.

15. The method of Claim 1 wherein:
the catholyte feed received includes potassium hydroxide;
the electrical potential applied between the anode and the cathode is sufficient to reduce the carbon dioxide to carbon monoxide;
the carbon monoxide and the potassium hydroxide are converted to a potassium formate via a first thermal reactor;
the potassium formate is converted to potassium oxalate via a second thermal reactor;
the potassium oxalate is received at an electrochemical acidification electrolyzer; and
the potassium oxalate is converted to oxalic acid at an electrochemical acidification electrolyzer.

16. The method of Claim 15, wherein the anolyte feed includes water and sulfuric acid.

17. The method of Claim 15, further comprising receiving a feed of potassium hydroxide at the second thermal reactor.

18. The method of Claim 15, wherein converting the potassium oxalate to oxalic acid at the electrochemical acidification electrolyzer comprises:
passing the potassium oxalate through an ion exchange region of the electrochemical acidification electrolyzer bounded by one or more cation ion exchange membranes.

## Patentansprüche

1. Verfahren zum Herstellen von Oxalsäure, umfassend:
Aufnehmen einer Anolytzufuhr an einem Anolytbereich einer elektrochemischen Zelle, die eine Anode enthält;
Aufnehmen einer Katholitzufuhr, die Kohlendioxid und ein Alkalimetallhydroxid enthält, an einem Katholitbereich der elektrochemischen Zelle, die eine Kathode enthält;
Anlegen eines elektrischen Potentials zwischen der Anode und der Kathode, das ausreicht, um das Kohlendioxid zu wenigstens einem Reduktionsprodukt zu reduzieren;
Umwandeln des wenigstens einen Reduktionsprodukts und des Alkalimetallhydroxids zu einem Alkalimetalloxalat mithilfe eines thermischen Reaktors;
Aufnehmen des Alkalimetalloxalats in einem elektrochemischen Säuerungs-Elektrolyseur; und
Umwandeln des Alkalimetalloxalats zu Oxalsäure in einem elektrochemischen Säuerungs-Elektrolyseur.

2. Verfahren gemäß Anspruch 1, wobei die Anolytzufuhr umfasst:
- Wasser und Schwefelsäure; oder
- Wasser und einen Halogenwasserstoff.

3. Verfahren gemäß Anspruch 2, wobei der Halogenwasserstoff Bromwasserstoff umfasst.

4. Verfahren gemäß Anspruch 1, wobei das Alkalimetallhydroxid Kaliumhydroxid umfasst.

5. Verfahren gemäß Anspruch 1, wobei das wenigstens eine Reduktionsprodukt Kohlenmonoxid oder Kaliumformiat umfasst.

6. Verfahren gemäß Anspruch 1, wobei Umwandeln des wenigstens einen Reduktionsprodukts und des Alkalimetallhydroxids zu einem Alkalimetalloxalat in einem thermischen Reaktor umfasst:
Erzeugen eines Alkalimetallformiat-Zwischenprodukts.

7. Verfahren gemäß Anspruch 6, wobei das Alkalimetallformiat-Zwischenprodukt Kaliumformiat ist.

8. Verfahren gemäß Anspruch 1, wobei Umwandeln des Alkalimetalloxalats zu Oxalsäure in dem elektrochemischen Säuerungs-Elektrolyseur umfasst:
Führen des Alkalimetalloxalats durch einen Ionenaustauschbereich des elektrochemischen Säuerungs-Elektrolyseurs, der an eine oder mehrere Kationen-Ionenaustauschmembranen gebunden ist.

9. System zum Herstellen einer Oxalsäure, umfassend:
eine elektrochemische Zelle mit einem Anolytbereich, der eine Anode umfasst, und einem Katholitbereich, der eine Kathode umfasst, getrennt durch wenigstens eine Ionenaustauschmembran;
einen Anolytzufuhr-Eingang, der funktionsfähig mit dem Anolytbereich der elektrochemischen Zelle gekoppelt ist;
einen Katholitzufuhr-Eingang, der funktionsfähig mit dem Katholitbereich der elektrochemischen Zelle gekoppelt ist, wobei die Katholitzufuhr Kohlendioxid und Alkalimetallhydroxid umfasst;
einen thermischen Reaktor, der dafür gestaltet ist, ein Reduktionsprodukt, das durch eine Reduktionsreaktion in dem Katholitbereich der elektrochemischen Zelle erzeugt ist, und das Alkalimetallhydroxid aufzunehmen;
einen elektrochemischen Säuerungs-Elektrolyseur, der dafür gestaltet ist, in dem thermischen Reaktor erzeugtes Alkalimetalloxalatprodukt aufzunehmen und Oxalsäure zu erzeugen; und
eine Quelle von elektrischem Potential, die funktionsfähig mit der elektrochemischen Zelle und dem elektrochemischen Säuerungs-Elektrolyseur verbunden ist.

10. System gemäß Anspruch 9, wobei die Anolytzufuhr umfasst:
- Wasser und Schwefelsäure; oder
- Wasser und einen Halogenwasserstoff.

11. System gemäß Anspruch 10, wobei der Halogenwasserstoff Bromwasserstoff umfasst.

12. System gemäß Anspruch 9, wobei das Alkalimetallhydroxid Kaliumhydroxid umfasst.

13. System gemäß Anspruch 9, wobei der thermische Reaktor, der dafür gestaltet ist, ein durch eine Reduktionsreaktion in dem Katholitbereich der elektrochemischen Zelle erzeugtes Reduktionsprodukt und das Alkalimetallhydroxid aufzunehmen, umfasst:
einen ersten thermischen Reaktor, der dafür gestaltet ist, ein Kohlenmonoxid-Reduktionsprodukt und das Alkalimetallhydroxid aufzunehmen und ein Alkalimetallformiatprodukt zu erzeugen; und
einen zweiten thermischen Reaktor, der dafür gestaltet ist, das Alkalimetallformiatprodukt und ein Alkalimetallhydroxid aufzunehmen und ein Alkalimetalloxalatprodukt zu erzeugen.

14. System gemäß Anspruch 9, wobei der elektrochemische Säuerungs-Elektrolyseur, der dafür gestaltet ist, ein Alkalimetalloxalatprodukt aufzunehmen, umfasst:
einen elektrochemischen Säuerungs-Elektrolyseur, der dafür gestaltet ist, ein Alkalimetalloxalatprodukt an einem Ionenaustauschbereich des elektrochemischen Säuerungs-Elektrolyseurs, der wenigstens teilweise durch eine oder mehrere Kationen-Ionenaustauschmembranen gebunden ist, aufzunehmen.

15. Verfahren gemäß Anspruch 1, wobei:
die aufgenommene Katholitzufuhr Kaliumhydroxid umfasst;
das zwischen der Anode und der Kathode angelegte elektrische Potential ausreicht, um das Kohlendioxid zu Kohlenmonoxid zu reduzieren;
das Kohlenmonoxid und das Kaliumhydroxid über einen ersten thermischen Reaktor zu einem Kaliumformiat umgewandelt werden;
das Kaliumformiat über einen zweiten thermischen Reaktor zu Kaliumoxalat umgewandelt wird;
das Kaliumoxalat von einem elektrochemischen Säuerungs-Elektrolyseur aufgenommen wird; und
das Kaliumoxalat in einem elektrochemischen Säuerungs-Elektrolyseur zu Oxalsäure umgewandelt wird.

16. Verfahren gemäß Anspruch 15, wobei die Anolytzufuhr Wasser und Schwefelsäure enthält.

17. Verfahren gemäß Anspruch 15, ferner umfassend Aufnehmen einer Zufuhr von Kaliumhydroxid von dem zweiten thermischen Reaktor.

18. Verfahren gemäß Anspruch 15, wobei Umwandeln des Kaliumoxalats zu Oxalsäure in dem elektrochemischen Säuerungs-Elektrolyseur umfasst:
Führen des Kaliumoxalats durch einen Ionenaustauschbereich des elektrochemischen Säuerungs-Elektrolyseurs, der an eine oder mehrere Kationen-Ionenaustauschmembranen gebunden ist.

## Revendications

1. Procédé pour la production d'acide oxalique comprenant :
la réception d'une charge d'anolyte dans une zone d'anolyte d'une cellule électrochimique comprenant une anode ;
la réception d'une charge de catholyte comprenant du dioxyde de carbone et un hydroxyde de métal alcalin dans une zone de catholyte de la cellule électrochimique comprenant une cathode ;
l'application entre l'anode et la cathode d'un potentiel électrique suffisant pour réduire le dioxyde de carbone en au moins un produit de réduction ;
la conversion de l'au moins un produit de réduction et de l'hydroxyde de métal alcalin en un oxalate de métal alcalin par l'intermédiaire d'un réacteur thermique ;
la réception de l'oxalate de métal alcalin dans un électrolyseur d'acidification électrochimique ; et
la conversion de l'oxalate de métal alcalin en acide oxalique dans un électrolyseur d'acidification électrochimique.

2. Procédé selon la revendication 1, dans lequel la charge d'anolyte comprend de l'eau et de l'acide sulfurique ; ou de l'eau et un halogénure d'hydrogène.

3. Procédé selon la revendication 2, dans lequel l'halogénure d'hydrogène comprend du bromure d'hydrogène.

4. Procédé selon la revendication 1, dans lequel l'hydroxyde de métal alcalin comprend de l'hydroxyde de potassium.

5. Procédé selon la revendication 1, dans lequel l'au moins un produit de réduction comprend du monoxyde de carbone ou du formiate de potassium.

6. Procédé selon la revendication 1, dans lequel la conversion de l'au moins un produit de réduction et de l'hydroxyde de métal alcalin en un oxalate de métal alcalin dans un réacteur thermique comprend :
la production d'un produit intermédiaire formiate de métal alcalin.

7. Procédé selon la revendication 6, dans lequel l'intermédiaire formiate de métal alcalin est le formiate de potassium.

8. Procédé selon la revendication 1, dans lequel la conversion de l'oxalate de métal alcalin en acide oxalique dans l'électrolyseur d'acidification électrochimique comprend :
le passage de l'oxalate de métal alcalin dans une zone d'échange d'ions de l'électrolyseur d'acidification électrochimique délimitée par une ou plusieurs membranes échangeuses d'ions cationiques.

9. Système pour la production d'un acide oxalique comprenant :
une cellule électrochimique ayant une zone d'anolyte comprenant une anode et une zone de catholyte comprenant une cathode séparées par au moins une membrane échangeuse d'ions ;
une entrée de charge d'anolyte raccordée de manière fonctionnelle à la zone d'anolyte de la cellule électrochimique ;
une entrée de charge de catholyte raccordée de manière fonctionnelle à la zone de catholyte de la cellule électrochimique, la charge de catholyte comprenant du dioxyde de carbone et de l'hydroxyde de métal alcalin ;
un réacteur thermique conçu pour recevoir un produit de réduction, produit par l'intermédiaire d'une réaction de réduction dans la zone de catholyte de la cellule électrochimique, et l'hydroxyde de métal alcalin ;
un électrolyseur d'acidification électrochimique conçu pour recevoir du produit oxalate de métal alcalin produit dans le réacteur thermique et produire de l'acide oxalique ; et
une source de potentiel électrique connectée de manière fonctionnelle à la cellule électrochimique et à l'électrolyseur d'acidification électrochimique.

10. Système selon la revendication 9, dans lequel la charge d'anolyte comprend de l'eau et de l'acide sulfurique ; ou de l'eau et un halogénure d'hydrogène.

11. Système selon la revendication 10, dans lequel l'halogénure d'hydrogène comprend du bromure d'hydrogène.

12. Système selon la revendication 9, dans lequel l'hydroxyde de métal alcalin comprend de l'hydroxyde de potassium.

13. Système selon la revendication 9, dans lequel le réacteur thermique conçu pour recevoir un produit de réduction, produit par l'intermédiaire d'une réaction de réduction dans la zone de catholyte de la cellule électrochimique, et l'hydroxyde de métal alcalin comprend :
un premier réacteur thermique conçu pour recevoir un produit de réduction monoxyde de carbone et l'hydroxyde de métal alcalin et produire un produit formiate de métal alcalin ; et
un second réacteur thermique conçu pour recevoir le produit formiate de métal alcalin et un hydroxyde de métal alcalin et produire un produit oxalate de métal alcalin.

14. Système selon la revendication 9, dans lequel l'électrolyseur d'acidification électrochimique conçu pour recevoir un produit oxalate de métal alcalin comprend :
un électrolyseur d'acidification électrochimique conçu pour recevoir un produit oxalate de métal alcalin dans une zone d'échange d'ions de l'électrolyseur d'acidification électrochimique délimitée au moins en partie par une ou plusieurs membranes échangeuses d'ions cationiques.

15. Procédé selon la revendication 1 dans lequel :
la charge de catholyte reçue comprend de l'hydroxyde de potassium ;
le potentiel électrique appliqué entre l'anode et la cathode est suffisant pour réduire le dioxyde de carbone en monoxyde de carbone ;
le monoxyde de carbone et l'hydroxyde de potassium sont convertis en un formiate de potassium par l'intermédiaire d'un premier réacteur thermique ;
le formiate de potassium est converti en oxalate de potassium par l'intermédiaire d'un second réacteur thermique ;
l'oxalate de potassium est reçu dans un électrolyseur d'acidification électrochimique ; et
l'oxalate de potassium est converti en acide oxalique dans un électrolyseur d'acidification électrochimique.

16. Procédé selon la revendication 15, dans lequel la charge d'anolyte comprend de l'eau et de l'acide sulfurique.

17. Procédé selon la revendication 15, comprenant en outre la réception d'une charge d'hydroxyde de potassium dans le second réacteur thermique.

18. Procédé selon la revendication 15, dans lequel la conversion de l'oxalate de potassium en acide oxalique dans l'électrolyseur d'acidification électrochimique comprend :
le passage de l'oxalate de potassium dans une zone d'échange d'ions de l'électrolyseur d'acidification électrochimique délimitée par une ou plusieurs membranes échangeuses d'ions cationiques.
